(19) Europäisches Patentamt
European Patent Office
Office européen des brevets

(11) **EP 3 843 190 B1**

(12) **EUROPÄISCHE PATENTSCHRIFT**

(45) Veröffentlichungstag und Bekanntmachung des Hinweises auf die Patenterteilung:
**15.03.2023 Patentblatt 2023/11**

(21) Anmeldenummer: **19219243.3**

(22) Anmeldetag: **23.12.2019**

(51) Internationale Patentklassifikation (IPC):
**H01M 8/04089** (2016.01)   **H01M 8/04082** (2016.01)
**H01M 8/04225** (2016.01)   **H01M 8/04223** (2016.01)
**H01M 8/1018** (2016.01)   **H01M 8/10** (2006.01)

(52) Gemeinsame Patentklassifikation (CPC):
**H01M 8/04089; H01M 8/04216; H01M 8/04225;**
**H01M 8/04253;** H01M 2008/1095; H01M 2250/20;
Y02E 60/32; Y02E 60/50; Y02T 90/40

(54) **FROSTSTARTFÄHIGES METALLHYDRID-WASSERSTOFFTANKSYSTEM**

FROST STARTABLE METAL HYDRIDE HYDROGEN TANK SYSTEM

SYSTÈME DE RÉSERVOIR D'HYDROGÈNE À HYDRURE MÉTALLIQUE CAPABLE DE DÉMARRER EN CAS DE GEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.06.2021 Patentblatt 2021/26**

(73) Patentinhaber:
• **Helmholtz-Zentrum hereon GmbH**
**21502 Geesthacht (DE)**
• **VOLKSWAGEN AG**
**38440 Wolfsburg (DE)**
Benannte Vertragsstaaten:
**AL AT BE BG CH CY CZ DE DK EE FI FR GB GR HR HU IE IS LI LT LU LV MC MK MT NL NO PL PT RO RS SE SI SK SM TR**
• **PANCO GmbH**
**56218 Mülheim-Kärlich (DE)**
• **Stühff GmbH**
**21502 Geesthacht (DE)**

(72) Erfinder:
• **Jepsen, Julian**
**22397 Hamburg (DE)**
• **Bellosta von Colbe, José M.**
**21465 Wentorf (DE)**
• **Klassen, Thomas**
**21465 Wentorf (DE)**
• **Dornheim, Martin**
**21391 Reppenstedt (DE)**

• **Taube, Klaus**
**22549 Hamburg (DE)**
• **Puszkiel, Julián**
**08003 Barcelona (ES)**
• **Kallias, Anna**
**29348 Eschede (DE)**
• **Stühff, Holger**
**21502 Geesthacht (DE)**
• **Platzek, Dieter**
**56218 Mülheim-Kärlich (DE)**
• **Cabezas Marce, Ignasi**
**08800 Vilanova i la Geltru (ES)**

(74) Vertreter: **Uexküll & Stolberg**
**Partnerschaft von**
**Patent- und Rechtsanwälten mbB**
**Beselerstraße 4**
**22607 Hamburg (DE)**

(56) Entgegenhaltungen:
**EP-A2- 1 468 722    DE-A1-102008 002 624**
**US-A1- 2005 135 961**

• **SAKINTUNA ET AL: "Metal hydride materials for solid hydrogen storage: A review",** INTERNATIONAL JOURNAL OF HYDROGEN ENERGY, ELSEVIER SCIENCE PUBLISHERS B.V., BARKING, GB, Bd. 32, Nr. 9, 23. Mai 2007 (2007-05-23), Seiten 1121-1140, XP022093235, ISSN: 0360-3199, DOI: 10.1016/J.IJHYDENE.2006.11.022

**Beschreibung**

GEBIET DER ERFINDUNG

Die Erfindung betrifft ein froststartfähiges Metallhydrid-Wasserstofftanksystem, beispielsweise ein Wasserstofftanksystem für einen exothermen Wasserstoffabnehmer wie eine Brennstoffzelle, sowie ein Verfahren zum Betrieb eines solchen exothermen Wasserstoffabnehmers.

HINTERGRUND DER ERFINDUNG

Bei der Elektrolyse von Wasser werden Wassermoleküle durch elektrischen Strom in Wasserstoff ($H_2$) und Sauerstoff ($O_2$) zerlegt. In einer Brennstoffzelle läuft dieser Vorgang in umgekehrter Richtung ab. Durch die elektroche-mische Verbindung von Wasserstoff ($H_2$) und Sauerstoff ($O_2$) zu Wasser wird die frei werdende Energie mit hohem Wirkungsgrad zu elektrischem Strom umgewandelt.

Die technische Umsetzung des Prinzips der Brennstoffzelle hat zu unterschiedlichen Lösungen, und zwar mit verschiedenartigen Elektrolyten und mit Betriebstemperaturen zwischen 10°C und 1000°C, geführt. In Abhängigkeit von ihrer Betriebstemperatur werden die Brennstoffzellen in Niedertemperatur-, Mitteltemperatur- und Hochtemperatur-Brennstoffzellen eingeteilt (siehe z.B. DE 198 36 352 A1). Niedertemperatur-Brennstoffzellen arbeiten bei vergleichsweise moderaten Betriebstemperaturen von 60°C bis 120°C und eignen sich auf Grund der moderaten Temperaturen insbesondere für mobile Anwendungen wie zum Betrieb eines Kraftfahrzeugs. In Kraftfahrzeugen wird die Brennstoffzelle des Typs Niedertemperatur-PEM bevorzugt eingesetzt und bei Temperaturen zwischen 60°C und 90°C betrieben.

Der als Brennstoff erforderliche Wasserstoff wird üblicherweise aus einem Drucktank bereitgestellt, da mit diesem Wasserstoff im gesamten Betriebstemperaturbereich zur Verfügung gestellt werden kann. Diese Drucktanks sind aber vergleichsweise voluminös, so dass die Reichweite von mobilen Anwendungen wie beim Betrieb eines Kraftfahrzeugs durch den zur Verfügung stehenden, limitierten Speicherraum eingeschränkt wird. Es ist bekannt, dass auf der Basis von Metallhydriden Wasserstoffspeicher, sogenannte Metallhydrid-Speicher, gebildet werden können, die sehr viel weniger Platz bei gleicher Kapazität beanspruchen. Allerdings muss Metallhydrid-Speichern zur Desorption von Wasserstoff in der Regel Wärme zugeführt werden; bei der Absorption von Wasserstoff muss Wärme abgeführt werden. In Abhängigkeit vom Metallhydrid sind für die Wasserstoffdesorption Temperaturen zwischen -30°C und 400°C erforderlich. Im Allgemeinen sind aber Wasserstoffdrücke von weniger als 10 MPa notwendig, die zum Betrieb einer Brennstoffzelle ausreichen, was die Konstruktion dieser Tanks gegenüber Wasserstoffdrucktanks erheblich vereinfacht.

Auch als Wasserstoffspeicher verwendete Metallhydride werden, je nach Desorptionstemperatur, in verschiedene Kategorien eingeteilt. Eine Übersicht über gängige Metallhydride und ihre Eigenschaften findet sich in B. Sakintuna et al. "Metal hydride materials for solid hydrogen storage: A review", International Journal of Hydrogen Energy, Vol. 32 (2007), 1121-1140, auf die hier Bezug genommen wird. Wasserstoff wird nach der Gleichung:

$$\texttt{Metall + Wasserstoff} \leftrightarrow \texttt{Metallhydrid + Wärme}$$

in das Metallgitter eingelagert (absorbiert) respektive aus dem Hydrid gelöst (desorbiert). Der Zusammenhang zwischen Druck, Temperatur und Wasserstoffkonzentration im Metall wird als Konzentration-Druck-Isotherme (KDI) dargestellt. Wasserstoff wird bei einer bestimmten Temperatur unter Erhöhung des Drucks im Metallgitter gelöst. Dieser Vorgang gehorcht dem Sieverts'schen Gesetz, bis eine Sättigungskonzentration erreicht ist ($\alpha$-Phase). Danach steigt die Konzentration im Metall ohne Druckanstieg - die Hydridphase ($\beta$-Phase) wird gebildet. Dieser Plateaubereich gehorcht sowohl dem van't-Hoff'schen Gesetz als auch der Gibbs'schen Phasenregel. Am Plateauende steigt der Druck wieder quadratisch an und Wasserstoff wird in der Hydridphase nach dem Sieverts'schen Gesetz gelöst. Zum Vergleich verschiedener Hydride hat es sich eingebürgert, ausgehend von den Gleichgewichtswerten in der Plateaumitte van't-Hoff-Diagramme zu konstruieren. Aus der Steigung der Geraden lässt sich die Reaktionsenthalpie für die Wasserstoffab-sorptionsreaktion ($\Delta H_{abs}$) ablesen.

Bei Mitteltemperaturhydriden beginnt die Desorption bei einem Normaldruck von 10 kPa zwischen 100°C und 200°C. Mitteltemperaturhydride sind definiert durch eine absolute Reaktionsenthalpie ($\Delta H_{abs}$) für die Wasserstoffab-sorptionsreaktion zwischen 30 kJ/mol $H_2$ und 65 kJ/mol $H_2$. In der Regel weisen sie eine Speicherdichte für Wasserstoff von ca. 2,5 Gew.-% bis 5 Gew.-% auf Basis des zugrundeliegenden Metalls auf. Zu den Mitteltemperaturhydriden zählen u.a. Alanate wie $NaAlH_4$ und Amide wie $LiNH_2$ mit einer $H_2$-Aufnahmefähigkeit von bis zu 4,5 Gew.-%. Die optimale Wasserstoffaufnahmetemperatur liegt z.B. für Natriumalanat bei ca. 125°C und die Wasserstoffabgabetemperatur bei 160 bis 185°C. Mitteltemperaturhydride sind aufgrund der relativ hohen Wasserstoffspeicherkapazität und relativ niedrigen Betriebstemperaturen interessante Kandidaten für mobile Anwendungen.

Bei Hochtemperaturhydriden beginnt die Desorption bei einem Normaldruck von 10 kPa über 200°C. Sie sind definiert durch eine absolute Reaktionsenthalpie $\Delta H_{abs}$ für die Wasserstoffabsorptionsreaktion von mehr als 65 kJ/mol $H_2$. Sie haben in der Regel eine noch höhere Speicherdichte für Wasserstoff von ca. 7 Gew.-% bis 15 Gew.-% auf Basis des zugrundeliegenden Metalls. Oft aus Leichtmetallen (Magnesium, Aluminium) und/oder Nichtmetallen (Stickstoff, Bor) gebildet, wären sie für den Einsatz bei Brennstoffzellen und $H_2$-Verbrennungsmotoren aufgrund der hohen Kapazitäten möglicherweise geeignet, doch die hohen Temperaturen sind ein Hindernis für deren Verwendung als Speicher für Brennstoffzellen. Hochtemperaturhydride werden für den Einsatz bei Brennstoffzellen und $H_2$-Verbrennungsmotoren daher zurzeit nicht eingesetzt.

Niedertemperaturhydride mit einer Desorptionstemperatur bei einem Normaldruck von 10 kPa zwischen -40°C und unter 100°C werden auf Grund ihrer relativ niedrigen gewichtsbezogenen Speicherkapazität für Wasserstoff von weniger als 2 Gew.-% nur sehr speziell für mobile Anwendungen, insbesondere für Prototypen von Gabelstaplern und Fahrrädern, verwendet, bei denen eine geringen Speicherkapazität in Kauf genommen werden kann. Sie sind definiert durch eine absolute Reaktionsenthalpie $\Delta H_{abs}$ für die Wasserstoffabsorptionsreaktion von weniger als 30 kJ/mol $H_2$.

Für die allgemeine Anwendung von Metallhydrid-Speichern benötigt man daher ein externes Heizsystem, das den Metallhydrid-Speicher zu seiner Entladung beheizt. Die zur Heizung des Metallhydrid-Speichers erforderliche Energie wird bislang in der Regel aus der Brennstoffzelle oder einer anderen Wärmequelle entnommen. Eine Entnahme der erforderlichen Energie für die Entladung eines Metallhydrid-Speichers ist jedoch nicht beim Start der Brennstoffzelle und in den ersten Minuten ihres Betriebs möglich, wenn sie noch nicht ausreichend Wärme für die Beheizung des Metallhydrid-Speichers bereitstellt. Des Weiteren können die aus der Praxis bekannten Brennstoffzellen erst ab einer bestimmten Starttemperatur Strom für externe Nutzung produzieren. Bei einem Kaltstart oder einem Sofortstart muss eine Brennstoffzelle also zunächst auf Temperaturen oberhalb der Starttemperatur erwärmt werden. Aufgrund der großen thermischen Masse der Brennstoffzellen ist dazu eine beträchtliche Heizleistung erforderlich, insbesondere wenn der Kaltstart in ähnlich kurzen Zeiten erfolgen soll, wie bei herkömmlichen Verbrennungsmotoren.

Aus der DE 103 17 123 B4 ist eine Brennstoffzelle für einen mobilen Einsatz mit einer Kaltstartvorrichtung bekannt, die einen Wasserstoff-Drucktank als Wasserstoffspeicher sowie Metallhydrid-Heizeinrichtung umfasst. Wasserstoff aus dem Druckgastank wird über den desorbierten Metallhydridspeicher geleitet. Dieser erwärmt sich bei der Bildung des entsprechenden Metallhydrids und verbessert damit die Leistungsfähigkeit des Brennstoffzellensystems. Allerdings ist bei der aus der DE 103 17 123 B4 bekannten Kaltstartvorrichtung die Anzahl der Kaltstartvorgänge und der Sofortstartvorgänge durch die Größe des Druckspeichers begrenzt, weil der Druckspeicher bei jedem Kalt- und Sofortstart sukzessive entladen und nicht automatisch wieder beladen wird. Somit bietet dieses System nur eine verbesserte Funktion von einem drucktankbasierten Speicher, der auch ohne diese Vorrichtung kalt- und sofortstartfähig ist.

I. Bürger et al. "Advanced reactor concept for complex hydrides: Hydrogen absorption from room temperature" International Journal of Hydrogen Energy, Vol. 39 (2014), Seiten 7030-7041 offenbart eine Kombination aus einem komplexen Hydrid (CxH) und einem Raumtemperaturhydrid (MeH) in einem Tank unter Ausnutzung der hohen Beladungskapazität der komplexen Hydride und der hohen Reaktionsgeschwindigkeit der Raumtemperaturhydride, um die Kaltstarteigenschaften zu verbessern. Das Raumtemperaturhydrid wird beim Kaltstart mit Wasserstoff beladen und erwärmt sich durch die exotherme Reaktion. Dadurch erwärmt es auch das komplexe Hydrid, welches somit langsam auf Betriebstemperatur gebracht wird, Wasserstoff abgibt und damit die Brennstoffzelle mit Wasserstoff versorgt. Durch diese Reaktionskaskade von Raumtemperaturhydrid und komplexem Hydrid und der langsamen Erwärmung des komplexen Hydrids ist das System vergleichsweise träge. Darüber hinaus ist in der Druckschrift nicht beschrieben, wie die Beladung des Raumtemperaturhydrids erfolgen soll.

M. Kölbig et al. "Characterization of metal hydrides for thermal applications in vehicles below 0 °C", International Journal of Hydrogen Energy, Vol. 44 (2019), Seiten 4878-4888 betrachtet die Be- und Entladung eines geschloseenen Systems aus $LaNi_{4.85}Al_{0.15}$ als Wärme erzeugendes Metallhydrid und HYDRALLOY C5® ($Ti_{0.95}Zr_{0.05}Mn_{1.46}V_{0.45}Fe_{0.09}$) als Hydrid lieferndes Metallhydrid unterhalb von 0°C. DE 10 2008 002 624 A1 offenbart ein Wasserstoffspeicherungssystem für ein Brennstoffzellenfahrzeug, wobei das Wasserstoffspeicherungssystem aufweist: einen äußeren Raum, der mit einem ersten Speicherlegierungspulver gefüllt ist, mittels welchem der Wasserstoff bei einer hohen Temperatur freisetzbar ist; einen inneren Raum, der mit einem zweiten Speicherlegierungspulver gefüllt ist, mittels welchem der Wasserstoff nur mit der von einem Brennstoffzellenblock erzeugten Wärme freisetzbar ist; einen Metallfilter, der zwischen dem äußeren und inneren Raum angeordnet ist, so dass der äußere und innere Raum geteilt ist; ein zweites Wärmetauschrohr, das zwischen dem Brennstoffzellenblock und einem Kühler vorgesehen ist, um einen Kühlkreis zu bilden und entlang einer längs laufenden Richtung des inneren Raums angeordnet ist; und einen unabhängigen Wärmetauschkreis, der unabhängig mit dem äußeren Raum für die Wasserstofffreisetzung des ersten Speicherlegierungspulvers verbunden ist.

EP 1 468 722 A2 gibt ein Reformat-Puffer-System an, bei der Wasserstoff aus einer Abtrennvorrichtung in einen Behälter mit einem ersten Hydrid und von dort in einen Speicher mit einem zweiten Hydrid geleitet wird.

Alle oben genannten Systeme beruhen darauf, dass die Brennstoffzelle durch ein Metallhydrid gespeist wird, das vor Inbetriebnahme durch eine andere Quelle erwärmt wird. Erst nach dem Aufheizen des Metallhydrids kann die Brennstoffzelle betrieben werden. Aufgabe der vorliegenden Erfindung ist es, eine effiziente Kaltstartvorrichtung für einen exothermen Wasserstoffabnehmer wie eine Brennstoffzelle zur Verfügung zu stellen, der sofort in Betrieb genommen werden kann und keinen Drucktank oder externe Wasserstoffquelle benötigt, die auf Grund des begrenzten zur Verfügung stehenden Raums z.B. in Personenkraftwagen nachteilig sind. Des Weiteren soll die Kaltstartvorrichtung für eine unbegrenzte Zahl von Startvorgängen zur Verfügung stehen.

ZUMSAMMENFASSUNG DER ERFINDUNG

Erfindungsgemäß wird diese Aufgabe durch eine Vorrichtung zum Betrieb eines exothermen Wasserstoffabnehmers wie einer Brennstoffzelle mit den in Anspruch 1 genannten Merkmalen gelöst. Ebenfalls wird diese Aufgabe durch ein Verfahren nach Anspruch 9 gelöst.

Bevorzugte Ausführungsformen der Erfindung sind in den Unteransprüchen wiedergegeben.

Eine erste Ausführungsform der Erfindung betrifft eine Vorrichtung zum Betrieb eines exothermen Wasserstoffabnehmers wie einer Brennstoffzelle, wobei die Vorrichtung den exothermen Wasserstoffabnehmer, wenigstens einen Startertank, der mit einem ersten Metallhydrid befüllt ist, das bei einer Temperatur von -40°C einen Gleichgewichtsdruck für die Desorption von Wasserstoff von mindestens 100 kPa aufweist, sowie mindestens einen Betriebstank umfasst, der mit wenigstens einem zweiten Metallhydrid befüllt ist, das einen Absolutbetrag der Reaktionsenthalpie für die Wasserstoffabsorptionsreaktion ($\Delta H_{abs}$) von kleiner als 65 kJ/mol $H_2$, bevorzugt zwischen 20 kJ/mol $H_2$ und kleiner als 65 kJ/mol $H_2$ aufweist, und das bei einer Temperatur von -40°C einen Gleichgewichtsdruck für die Desorption von Wasserstoff von unter 100 kPa aufweist, wobei erstes Metallhydrid und zweites Metalldyrid einen Differenzbetrag der Reaktionsenthalpien ($\Delta H_{abs}$) für die Wasserstoffabsorptionsreaktion von weniger als 65 kJ/mol $H_2$ aufweisen und wobei der Startertank in dem Betriebstank eingebettet ist. Die bekannte, im Allgemeinen geringe Wärmeleitfähigkeit von Metallhydriden wird dabei erfindungsgemäß ausgenutzt, um die Wärmeübertragung zwischen den Druckbehältern, die das Hoch- bzw. das Tieftemperatur-Hydrid enthalten, zu minimieren, so dass diese auf separaten Temperaturniveaus gehalten werden können. Zudem wird durch die Einbettung des Startertanks in den Betriebstank der für mobile Anwendungen zur Verfügung stehende Bauraum bestmöglich ausgenutzt.

Bevorzugt ist der exotherme Wasserstoffabnehmer eine Brennstoffzelle, die wenigstens eine Kathode und wenigstens eine Anode mit einem dazwischen angeordneten Elektrolyten umfasst. Am meisten bevorzugt ist der exotherme Wasserstoffabnehmer eine PEM-Brennstoffzelle, z.B. eine Niedertemperatur-PEM-Brennstoffzelle.

Bevorzugt ist der Startertank sphärisch oder zylindrisch ausgebildet. In einer Ausführungsform der Erfindung ist das Metallhydrid des Startertanks eines auf Basis einer Titan-Chrom-Mangan-Legierung. Weiterhin ist der Betriebstank bevorzugt in zwei oder mehr Module aufgeteilt. In einem oder mehreren dieser Module werden ein oder mehrere Module des Startertanks eingebettet, die mit dem ersten Metallhydrid befüllt sind, das Kaltstarteigenschaften hat. Da der Betiebstank bei seinem bevozugten maximalen Betriebsdruck von unter 50 bar nahezu jede Form annehmen kann, die für die praktisch vollständige Ausnutzung des zur Verfügung stehenden Bauvolumens notwendig ist, entsteht praktisch kein Leerraum, selbst wenn der Bauraum z.B. rechteckig ist. Die volumetrische Effizienz kann damit maximiert werden.

Eine zweite Ausführungsform der Erfindung betrifft ein Verfahren zum Betrieb eines exothermen Wasserstoffabnehmers wie einer Brennstoffzelle, wobei der exotherme Wasserstoffabnehmer zunächst mit Wasserstoff aus mindestens einem Startertank gespeist wird, der ein erstes Metallhydrid umfasst, dass bei einer Temperatur von -40°C einen Gleichgewichtsdruck für die Desorption von mindestens 100 kPa aufweist, und nach Erreichen der Betriebstemperatur der Brennstoffzelle mit Wasserstoff aus mindestens einem Betriebstank gespeist wird, der wenigstens ein zweites Metallhydrid umfasst, das einen Absolutwert der Reaktionsenthalpie für die Wasserstoffabsorptionsreaktion ($\Delta H_{abs}$) von kleiner als 65 kJ/mol $H_2$, bevorzugt zwischen 20 kJ/mol $H_2$ und kleiner als 65 kJ/mol $H_2$ aufweist, und das bei einer Temperatur von -40°C einen Gleichgewichtsdruck für die Desorption von Wasserstoff von unter 100 kPa aufweist, wobei erstes Metallhydrid und zweites Metalldyrid einen Differenzbetrag der Reaktionsenthalpien ($\Delta H_{abs}$) für die Wasserstoffabsorptionsreaktion von weniger als 65 kJ/mol $H_2$ aufweisen, und der Startertank gekühlt wird, wenn die Versorgung der Brennstoffzelle durch den zweiten Betriebstank beginnt, sodass der Startertank mit Wasserstoff aus dem Betriebstank wiederbeladen wird, wobei der Startertank in dem Betriebstank eingebettet ist, sodass das erste Metallhydrid gegenüber der Umgebungswärme isoliert ist, sobald der Startertank mit Wasserstoff aus dem Betriebstank beladen wird. Sobald der Startertank wieder voll beladen ist, kann seine Kühlung beendet werden.

Wie erwähnt, wird der exotherme Wasserstoffabnehmer, z.B. die Brennstoffzelle wie eine PEM-Brennstoffzelle, z.B. eine Niedertemperatur-PEM-Brennstoffzelle, zunächst mit Wasserstoff aus dem Startertank gespeist, wobei der Startertank bevorzugt wenigstens ein Metallhydrid umfasst, das bei einer Temperatur von -40°C einen Gleichgewichtsdruck für die Desorption von mindestens 300 kPa, noch bevorzugter mindestens 1000 kPa und insbesondere mindestens 1300 kPa aufweist, was insbesondere für Brennstoffzellen vorteilhaft ist, die im Rezirkulationsmodus betrieben werden.

Mit dem erfindungsgemäßen Verfahren wird ein exothermer Wasserstoffabnehmer wie eine Brennstoffzelle bei Kaltstartbedingungen mit ausreichend Wasserstoff aus dem Startertank versorgt, sodass der Wasserstoffabnehmer, beispielsweise die Brennstoffzelle, gestartet wird und sich auf Betriebstemperatur erwärmen kann. Mit der Abwärme des exothermen Wasserstoffabnehmers kann dann der Betriebstank als Hauptwasserstoffspeicher ebenfalls auf seine Betriebstemperatur erwärmt werden und die Versorgung des Wasserstoffabnehmers übernehmen. Bei Versorgung des Wasserstoffabnehmers durch den Betriebstank wird der Startertank wieder mit Wasserstoff aus dem Betriebstank beladen. Dazu ist es erforderlich, dass der Startertank von dem Betriebstank thermisch entkoppelt ist. Dazu macht sich die vorliegende Erfindung zunutze, dass Metallhydride eine geringe Wärmeleitfähigkeit aufweisen und als Isolator fungieren können.

Das beschriebene Verfahren, um den Startertank während des Betriebs des exothermen Wasserstoffabnehmers wieder zu beladen, ermöglicht gegenüber bisherigen Lösungen eine wesentliche höhere, nicht vom Volumen des Startertanks beschränkte Anzahl von Kaltstartvorgängen, und ist somit - neben der vereinfachten Konstruktion der Vorrichtung zum Betrieb beispielsweise einer Brennstoffzelle - ein Vorteil der Erfindung. Außerdem ermöglicht die erfindungsgemäße Lösung den Einsatz einer sehr preisgünstigen Speicherlösung für den Hauptwasserstoffspeicher, ohne dass dieser selbst Kaltstarteigenschaften aufweisen muss. Dadurch können für den Betriebstank Metallhydride mit höherem Wirkungsgrad verwendet werden und/oder solche, die kostengünstiger sind. Mit der erfindungsgemäßen Vorrichtung und dem erfindungsgemäßen Verfahren wird die Bereitstellung von Wasserstoff für den Betrieb beispielsweise der Brennstoffzelle - besonders bei niedrigen Temperaturen und z.B. für automotive Anwendungen - ohne Verzögerung gewährleistet, ebenso wie bei einem Drucktank - jedoch mit einer höheren volumetrischen Dichte und der Fähigkeit, auf Grund des geringeren Betriebsdrucks, die Form des Betriebtanks nahezu frei zu wählen.

Gemäß einer weiteren Ausführungsform der Erfindung weist der Startertank eine Umhüllung des darin enthaltenen Metallhydrids auf, die den Wasserstoff-Drücken bis zum maximalen Gleichgewichtsdruck des Hydrids bei Beladungs- und Betriebstemperatur des Betriebstanks widerstehen kann. Bevorzugt für die Umhüllung des Startertanks sind Super-Duplex-Stähle. Je niedriger der Gleichgewichtsdruck bei der Betriebstemperatur des Betriebstanks - mithin der maximal im System möglichen Temperatur desto - ist, desto dünner und leichter kann die Umhüllung des Startertanks sein.

Gemäß noch einer weiteren Ausführungsform der Erfindung umfasst die Vorrichtung zum Betrieb einer Brennstoffzelle ein Kühlsystem, das den Startertank bei seiner Beladung wieder kühlt, sobald der Betriebstank die Versorgung des Wasserstoffabnehmers übernommen hat. Peltierelemente haben hier den Vorteil, extrem platzsparend zu sein und eine direkte Kühlung der Hülle über Wärmeleitung zu ermöglichen oder durch Kopplung mit einem Wärmetauscher das Tanksystem über innenliegende Kühlkanäle zu kühlen. Sie können im reversiblen Betrieb auch als Heizelemente fungieren. Alternativ kann auch eine konventionelle, kompressorbasierte Kühlung verwendet werden.

Bevorzugt ist das Metallhydrid des Startertanks so ausgewählt, dass Wasserstoff bei Froststartbedingungen wie -40°C oder bei ähnlich niedrigen Temperaturen desorbiert wird. Sollte ein Metallhydrid mit einer höheren Desorptionstemperatur gewählt werden, so kann im Bedarfsfall, z.B. bei extrem niedrigen Temperaturen, eine Wärmeübertragung aus der Umgebung vorgesehen werden, z.B. durch als Heizung funktionierende Peltierelemente, durch eine konventionelle separate Heizung oder durch das Kühlmedium des exothermen Wasserstoffabnehmers, um die Wasserstoffdesorption dennoch zu ermöglichen.

Es ist vorteilhaft, dass die Wärmeübertragung durch einen niedrigen Versorgungsdruck des exothermen Wasserstoffabnehmers und einen hohen Beladungsdruck während des Betriebs herausgezögert wird, so dass erst zusätzliche Wärme benötigt wird, wenn das System ohnehin diese Wärme schon liefern kann.

Wenn nach dem durch den Startertank ermöglichten Betrieb der exotherme Wasserstoffabnehmer seine normale Betriebstemperatur erreicht hat (bei Niedertemperatur-PEM-Brennstoffzellen etwa 60°C bis 80°C), kann der Betriebstank sowie ggf. weitere im Fahrzeug vorhandene Verbraucher wie eine Fahrzeuginnenraumheizung mit thermischer Energie aus der Abwärme der Brennstoffzelle versorgt werden. Ein weiterer Teil der Leistung - für gewöhnlich elektrische Leistung - des exothermen Wasserstoffabnehmers (z.B. weniger als 5%) wird nach Erreichen dieses Betriebszustandes dazu verwendet, um den Startertank mittels seines Kühlsystems zu kühlen.

Der Betriebstank ist bevorzugt so konstruiert, dass er bei seiner eigenen Betriebstemperatur, die nicht notwendigerweise die gleiche ist, wie die des exothermen Wasserstoffabnehmers, einen höheren Wasserstoffdruck erzeugt, als der Gleichgewichtsdruck des kalten Startertanks. Damit kann der Startertank aus dem Betriebstank wiederbeladen werden.

Die bei der Wiederbeladung des Startertanks in diesem entstehende Wärme wird bevorzugt abgeführt, um seinen Gleichgewichtsdruck unter dem des Betriebstanks zu halten und eine Wiederbeladung des Startertanks zu ermöglichen. Sobald der Startertank voll beladen ist, kann die Kühlung abgeschaltet werden.

**Patentansprüche**

1. Vorrichtung zum Betrieb eines exothermen Wasserstoffabnehmers wie einer Brennstoffzelle, wobei die Vorrichtung den exothermen Wasserstoffabnehmer, wenigstens einen Startertank, der mit einem ersten Metallhydrid befüllt ist, das bei einer Temperatur von -40°C einen Gleichgewichtsdruck für die Desorption von Wasserstoff von mindestens 100 kPa aufweist, sowie mindestens einen Betriebstank umfasst, der mit wenigstens einem zweiten Metallhydrid befüllt ist, das einen Absolutbetrag seiner Reaktionsenthalpie für die Wasserstoffabsorptionsreaktion ($\Delta H_{abs}$) von kleiner als 65 kJ/mol $H_2$, bevorzugt zwischen 20 kJ/mol $H_2$ und kleiner als 65 kJ/mol $H_2$ aufweist, und das bei einer Temperatur von -40°C einen Gleichgewichtsdruck für die Desorption von Wasserstoff von unter 100 kPa aufweist, wobei erstes Metallhydrid und zweites Metalldyrid einen Differenzbetrag der Reaktionsenthalpien ($\Delta H_{abs}$) für die Wasserstoffabsorptionsreaktion von weniger als 65 kJ/mol $H_2$ aufweisen und wobei der Startertank in dem Betriebstank eingebettet ist.

2.  Vorrichtung nach Anspruch 1, wobei der exotherme Wasserstoffabnehmer eine Brennstoffzelle, bevorzugt eine PEM-Brennstoffzelle ist.

3.  Vorrichtung nach Anspruch 1 oder Anspruch 2, wobei der Startertank vollständig von dem Betriebstank umhüllt ist.

4.  Vorrichtung nach Anspruch 1, 2 oder 3, **dadurch gekennzeichnet, dass** der Startertank ein Metallhydrid umfasst, dass bei einer Temperatur von -40°C einen Gleichgewichtsdruck für die Desorption von mindestens 300 kPa aufweist.

5.  Vorrichtung nach Anspruch 4, **dadurch gekennzeichnet, dass** der Startertank ein Metallhydrid umfasst, dass bei einer Temperatur von -40°C einen Gleichgewichtsdruck für die Desorption von mindestens 1000 kPa aufweist.

6.  Vorrichtung nach Anspruch 5, **dadurch gekennzeichnet, dass** der Startertank ein Metallhydrid umfasst, dass bei einer Temperatur von -40°C einen Gleichgewichtsdruck für die Desorption von mindestens 1300 kPa aufweist.

7.  Vorrichtung nach einem der Ansprüche 1 bis 6, **dadurch gekennzeichnet, dass** das Metallhydrid des Startertanks eines auf Basis einer Titan-Chrom-Mangan-Legierung ist.

8.  Vorrichtung nach einem der Ansprüche 1 bis 7, wobei die Kühlung des Startertanks durch ein Peltierelement oder durch eine kompressorbasierte Kühlung erfolgt.

9.  Verfahren zum Betrieb eines exothermen Wasserstoffabnehmers wie einer Brennstoffzelle, wobei der exotherme Wasserstoffabnehmer zunächst mit Wasserstoff aus mindestens einem Startertank gespeist wird, der ein erstes Metallhydrid umfasst, das bei einer Temperatur von -40°C einen Gleichgewichtsdruck für die Desorption von mindestens 100 kPa aufweist, und nach Erreichen der Betriebstemperatur des exothermen Wasserstoffabnehmers mit Wasserstoff aus mindestens einem Betriebstank gespeist wird, der wenigstens ein zweites Metallhydrid umfasst, einen Absolutbetrag der Reaktionsenthalpie ($\Delta H_{abs}$) für die Wasserstoffabsorptionsreaktion kleiner als 65 kJ/mol $H_2$, bevorzugt zwischen 30 kJ/mol $H_2$ und kleiner als 65 kJ/mol $H_2$ aufweist, und das bei einer Temperatur von -40°C einen Gleichgewichtsdruck für die Desorption von Wasserstoff von unter 100 kPa aufweist, wobei erstes Metallhydrid und zweites Metalldyrid einen Differenzbetrag der Reaktionsenthalpien ($\Delta H_{abs}$) für die Wasserstoffabsorptionsreaktion von weniger als 65 kJ/mol $H_2$ aufweisen, und der Startertank gekühlt wird, wenn die Versorgung des exothermen Wasserstoffabnehmers durch den zweiten Betriebstank beginnt, und der Startertank mit Wasserstoff aus dem Betriebstank wiederbeladen wird, wobei der Startertank in dem Betriebstank eingebettet ist, so dass das erste Metallhydrid gegenüber der Umgebungswärme isoliert ist, sobald der Startertank mit Wasserstoff aus dem Betriebstank beladen wird.

10.  Verfahren nach Anspruch 9, wobei der exotherme Wasserstoffabnehmer eine Brennstoffzelle, bevorzugt eine PEM-Brennstoffzelle ist.

11.  Verfahren nach Anspruch 9 oder 10, wobei der Startertank ein Metallhydrid umfasst, das bei einer Temperatur von -40°C einen Gleichgewichtsdruck für die Desorption von mindestens 300 kPa aufweist.

12.  Verfahren nach einem der Ansprüche 9 bis 11, wobei das Metallhydrid des Startertanks eines auf Basis einer Titan-Chrom-Mangan-Legierung ist.

13.  Verfahren nach einem der Ansprüche 9 bis 12, wobei die Kühlung des ersten Metallhydrid-Speichers durch ein Peltierelement oder durch eine kompressorbasierte Kühlung erfolgt.

14.  Verfahren nach einem der Ansprüche 9 bis 13, wobei bei Versorgung des exothermen Wasserstoffabnehmers durch den Betriebstank die Abwärme des exothermen Wasserstoffabnehmers dazu verwendet wird, um den Betriebstank zu erwärmen.

**Claims**

1. An apparatus for operating an exothermic hydrogen consumer such as a fuel cell, wherein the device comprises the exothermic hydrogen consumer, at least one starter tank which is filled with a first metal hydride, which has an equilibrium pressure for the desorption of hydrogen at a temperature of -40°C of at least 100 kPa, and at least one operating tank, which is filled with at least a second metal hydride which has an absolute reaction enthalpy for the hydrogen absorption reaction ($\Delta H_{abs}$) of less than 65 kJ/mol of $H_2$, preferably between 20 kJ/mol of $H_2$ and less than 65 kJ/mol of $H_2$, and which has an equilibrium pressure for the desorption of hydrogen at a temperature of -40°C of less than 100 kPa, wherein the difference of the reaction enthalpies for the hydrogen absorption reaction ($\Delta H_{abs}$) between the first metal hydride and the second metal hydride is less than 65 kJ/mol of $H_2$ and wherein the starter tank is incorporated into the operating tank.

2. The apparatus as claimed in claim 1, wherein the exothermic hydrogen consumer is a fuel cell, preferably a PEM fuel cell.

3. The apparatus as claimed in claim 1 or claim 2, wherein the starter tank is completely encased by the operating tank.

4. The apparatus as claimed in claim 1, 2 or 3, **characterized in that** the starter tank comprises a metal hydride which has an equilibrium pressure for desorption of at least 300 kPa at a temperature of -40°C.

5. The apparatus as claimed in claim 4, **characterized in that** the starter tank comprises a metal hydride which has an equilibrium pressure for desorption of at least 1000 kPa at a temperature of -40°C.

6. The apparatus as claimed in claim 5, **characterized in that** the starter tank comprises a metal hydride which has an equilibrium pressure for desorption of at least 1300 kPa at a temperature of -40°C.

7. The apparatus as claimed in one of claims 1 to 6, **characterized in that** the metal hydride of the starter tank is a titanium-chromium-manganese-based alloy.

8. The apparatus as claimed in one of claims 1 to 7, wherein cooling of the starter tank is carried out by means of a Peltier element or by means of compressor-based cooling.

9. A method for operating an exothermic hydrogen consumer such as a fuel cell, wherein the exothermic hydrogen consumer is initially supplied with hydrogen from at least one starter tank and which comprises a first metal hydride which has an equilibrium pressure for desorption of at least 100 kPa at a temperature of -40°C, and after reaching the operating temperature of the exothermic hydrogen consumer is supplied with hydrogen from at least one operating tank which comprises at least a second metal hydride, has an absolute value for the reaction enthalpy ($\Delta H_{abs}$) for the hydrogen absorption reaction of less than 65 kJ/mol $H_2$, preferably between 30 kJ/mol of $H_2$ and less than 65 kJ/mol of $H_2$, and which has an equilibrium pressure for the desorption of hydrogen of less than 100 kPa at a temperature of -40°C, wherein the difference of the reaction enthalpies for the hydrogen absorption reaction ($\Delta H_{abs}$) between the first metal hydride and the second metal hydride is less than 65 kJ/mol of $H_2$, and the starter tank is cooled when the supply for the exothermic hydrogen consumer from the second operating tank commences, and the starter tank is recharged with hydrogen from the operating tank, wherein the starter tank is incorporated into the operating tank so that the first metal hydride is insulated from environmental heat as soon as the starter tank is charged with hydrogen from the operating tank.

10. The method as claimed in claim 9, wherein the exothermic hydrogen consumer is a fuel cell, preferably a PEM fuel cell.

11. The method as claimed in claim 9 or 10, wherein the starter tank comprises a metal hydride which has an equilibrium pressure for desorption of at least 300 kPa at a temperature of -40°C.

12. The method as claimed in one of claims 9 to 11, wherein the metal hydride of the starter tank is a titanium-chromium-manganese-based alloy.

13. The method as claimed in one of claims 9 to 12, wherein cooling of the first metal hydride storage system is carried out by means of a Peltier element or by means of compressor-based cooling.

14. The method as claimed in one of claims 9 to 13, wherein, when supplying the exothermic hydrogen consumer by means of the operating tank, the exhaust heat from the exothermic hydrogen consumer is used to heat the operating tank.

**Revendications**

1. Dispositif permettant de faire fonctionner un consommateur exothermique d'hydrogène, tel qu'une pile à combustible, lequel dispositif comprend le consommateur exothermique d'hydrogène, au moins un réservoir de démarrage, chargé d'un premier hydrure de métal qui présente, à la température de -40 °C, une pression à l'équilibre d'au moins 100 kPa pour la désorption de l'hydrogène, ainsi qu'au moins un réservoir principal, chargé d'au moins un deuxième hydrure de métal qui présente une valeur absolue de son enthalpie de réaction pour la réaction d'absorption de l'hydrogène ($\Delta H_{abs}$) de moins de 65 kJ/molH$_2$, et située de préférence entre 20 et moins de 65 kJ/molH$_2$, et qui présente, à la température de -40 °C, une pression à l'équilibre inférieure à 100 kPa pour la désorption de l'hydrogène, étant entendu que la différence entre les enthalpies de réaction ($\Delta H_{abs}$) du premier hydrure de métal et du deuxième hydrure de métal pour la réaction d'absorption de l'hydrogène vaut moins de 65 kJ/molH$_2$ et que le réservoir de démarrage est incorporé dans le réservoir principal.

2. Dispositif conforme à la revendication 1, dans lequel le consommateur exothermique d'hydrogène est une pile à combustible, et de préférence, une pile à combustible PEM.

3. Dispositif conforme à la revendication 1 ou 2, dans lequel le réservoir de démarrage est complètement enveloppé dans le réservoir principal.

4. Dispositif conforme à la revendication 1, 2 ou 3, **caractérisé en ce que** le réservoir de démarrage contient un hydrure de métal qui présente, à la température de -40 °C, une pression à l'équilibre d'au moins 300 kPa pour la désorption.

5. Dispositif conforme à la revendication 4, **caractérisé en ce que** le réservoir de démarrage contient un hydrure de métal qui présente, à la température de -40 °C, une pression à l'équilibre d'au moins 1000 kPa pour la désorption.

6. Dispositif conforme à la revendication 5, **caractérisé en ce que** le réservoir de démarrage contient un hydrure de métal qui présente, à la température de -40 °C, une pression à l'équilibre d'au moins 1300 kPa pour la désorption.

7. Dispositif conforme à l'une des revendications 1 à 6, **caractérisé en ce que** l'hydrure de métal du réservoir de démarrage est un hydrure à base d'un alliage de titane, chrome et manganèse.

8. Dispositif conforme à l'une des revendications 1 à 7, **caractérisé en ce que** le refroidissement du réservoir de démarrage est réalisé au moyen d'un module Peltier ou par refroidissement par compresseur.

9. Procédé de fonctionnement d'un consommateur exothermique d'hydrogène, tel qu'une pile à combustible, dans lequel le consommateur exothermique d'hydrogène est d'abord alimenté avec de l'hydrogène provenant d'au moins un réservoir de démarrage, chargé d'un premier hydrure de métal qui présente, à la température de -40 °C, une pression à l'équilibre d'au moins 100 kPa pour la désorption de l'hydrogène, et une fois atteinte la température de fonctionnement du consommateur exothermique d'hydrogène, avec de l'hydrogène provenant d'au moins un réservoir principal, chargé d'au moins un deuxième hydrure de métal qui présente une valeur absolue de son enthalpie de réaction pour la réaction d'absorption de l'hydrogène ($\Delta H_{abs}$) de moins de 65 kJ/molH$_2$, et située de préférence entre 30 et moins de 65 kJ/molH$_2$, et qui présente, à la température de -40 °C, une pression à l'équilibre inférieure à 100 kPa pour la désorption de l'hydrogène, étant entendu que la différence entre les enthalpies de réaction ($\Delta H_{abs}$) du premier hydrure de métal et du deuxième hydrure de métal pour la réaction d'absorption de l'hydro-gène vaut moins de 65 kJ/molH$_2$, et dans lequel le réservoir de démar-rage est refroidi quand commence l'alimentation du consommateur exothermique d'hydrogène par le deuxième réservoir principal et le réservoir de démarrage est rechargé avec de l'hydrogène provenant du réservoir principal, étant entendu que le réservoir de démarrage est incorporé dans le réservoir principal de telle manière que le premier hydrure de métal est mis à l'abri de la chaleur environnante dès que le réservoir de démarrage est chargé avec de l'hydrogène provenant du réservoir principal.

10. Procédé conforme à la revendication 9, dans lequel le consommateur exothermique d'hydrogène est une pile à combustible, et de préférence, une pile à combustible PEM.

**11.** Procédé conforme à la revendication 9 ou 10, dans lequel le réservoir de démarrage contient un hydrure de métal qui présente, à la température de -40 °C, une pression à l'équilibre d'au moins 300 kPa pour la désorption.

**12.** Procédé conforme à l'une des revendications 9 à 11, dans lequel l'hydrure de métal du réservoir de démarrage est un hydrure à base d'un alliage de titane, chrome et manganèse.

**13.** Procédé conforme à l'une des revendications 9 à 12, dans lequel le refroidissement du premier réservoir à hydrure de métal est réalisé au moyen d'un module Peltier ou par refroidissement par compresseur.

**14.** Procédé conforme à l'une des revendications 9 à 13, dans lequel, lorsque le consommateur exothermique d'hydrogène est alimenté par le réservoir principal, la chaleur dégagée par le consommateur exothermique d'hydrogène est utilisée pour chauffer le réservoir principal.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19836352 A1
- DE 10317123 B4
- DE 102008002624 A1
- EP 1468722 A2


**In der Beschreibung aufgeführte Nicht-Patentliteratur**

- **B. SAKINTUNA et al.** Metal hydride materials for solid hydrogen storage: A review. *International Journal of Hydrogen Energy,* 2007, vol. 32, 1121-1140
- **I. BÜRGER et al.** Advanced reactor concept for complex hydrides: Hydrogen absorption from room temperature. *International Journal of Hydrogen Energy,* 2014, vol. 39, 7030-7041
- **M. KÖLBIG et al.** Characterization of metal hydrides for thermal applications in vehicles below 0 °C. *International Journal of Hydrogen Energy,* 2019, vol. 44, 4878-4888